# EUROPEAN PATENT APPLICATION

(11) **EP 4 576 276 A2**
(43) Date of publication of application: **25.06.2025**
(21) Application number: 24222522.5
(22) Date of filing: 20.12.2024
(51) Int. Cl.: H01M 4/66, H01M 4/70

(54) **CURRENT COLLECTOR FOR BIPOLAR STACKED BATTERIES**

(30) Priority: 20.12.2023 US 202363612495 P; 04.12.2024 US 202418967813
(71) Applicant: Lasagna.one Inc., San Jose, CA 95134 (US)
(72) Inventor: Katoh, Yuki, San Jose, 95134 (US)
(74) Representative: London IP Ltd

(57) **Abstract**

A current collector for a bipolar battery has a conductive region. An insulating region is formed around the conductive region to shield the conductive region.

## Description

### RELATED APPLCIATIONS

This patent application is related to U.S. Provisional Application No. 63/612,495 filed December 20, 2023, entitled "CURRENT COLLECTOR FOR BIPOLAR STACKED BATTERIES", which is incorporated herein by reference in its entirety. The present patent application claims the benefit under 35 U.S.C §119(e) of the aforementioned provisional application.

### TECHNICAL FIELD

This disclosure generally relates to batteries, more particularly, to a current collector for bipolar stack batteries.

### BACKGROUND OF THE INVENTION

Electric vehicles (EVs) have become increasingly prevalent in the market as an alternative to traditional internal combustion vehicles, largely due to their environmentally friendly nature and advanced technological features. The operation of electric vehicles heavily relies on their battery systems, which provide the necessary electrical energy to power the motors.

Conventionally, in order to generate sufficient voltage to operate high torque motors in vehicles, a large number of batteries are connected in series. However, this design has several inherent drawbacks. One drawback, for example, is that the stacking of batteries in series necessitates a significant number of joint parts. Joint parts not only contribute to a loss of energy density and power density due to volumetric loss, but they also introduce additional resistance, leading to a decrease in power density. Moreover, joint parts tend to focus current around the jointed areas, resulting in inhomogeneous temperature and current distribution across the batteries. This can ultimately contribute to the premature degradation of the battery system.

To address these challenges, bipolar batteries have been developed. In these bipolar batteries, a positive electrode and a negative electrode are arranged on both sides of a collector, significantly reducing the need for joint parts. However, these bipolar batteries come with their own set of problems. Specifically, they present a risk of shortage: if current collectors from different layers come into contact, the battery cells fail to exhibit the necessary voltage, leading to lower overall voltage. Similarly, if the electrolytes of different battery layers touch, the cells likewise fail to produce the required voltage.

U.S. Patent No. 9,373,869B2 outlines the use of separators made of inorganic solid electrolyte to avoid electrical short circuits. This particular method involves covering the current collector with an insulating polymer to prevent electrical short circuits. The challenge of U.S. Patent No. 9,373,869B2 is that it requires overlapping the reinforcement and electrode (cathode and anode) and separator. This configuration may cause air bubbles trapped between the layers, and delamination of those. Further, such configuration may lead to uneven pressure distribution during process. Such uneven pressure may cause cracking of electrode and/or separator.

Therefore, it would be desirable to provide a system and method that overcomes the above.

### SUMMARY OF THE INVENTION

This summary is provided to introduce a selection of concepts in a simplified form that are further described below in the DETAILED DESCRIPTION OF THE INVENTION. This summary is not intended to identify key features of the claimed subject matter, nor is it intended to be used as an aid in determining the scope of the claimed subject matter.

In accordance with one embodiment of the present invention, a current collector for a bipolar battery is disclosed. The current collector for a bipolar battery has a conductive region. An insulating region is formed around the conductive region to shield the conductive region.

In accordance with one embodiment of the present invention, a current collector for a bipolar battery is disclosed. The current collector for a bipolar battery has a conductive region having a thickness of 1 um to 50 um. The conductive region is formed of a composite material made from a mixture of conductive and non-conductive materials. The conductive materials are in a form to provide anisotropic conductivity to enhance conductivity in a thickness direction of the current collector while restraining in-plane conductivity. An insulating region is formed around the conductive region to shield the conductive region. The conductive region and the insulating region are formed to prevent ion conduction.

In accordance with one embodiment of the present invention, a current collector for a bipolar battery is disclosed. The current collector for a bipolar battery has a conductive region having a thickness of 1 um to 50 um. The conductive region is formed of a composite material made from a mixture of conductive and non-conductive materials. The conductive materials are formed to provide anisotropic conductivity to enhance conductivity in a thickness direction of the current collector while restraining in-plane conductivity. An insulating region is formed around the conductive region to shield the conductive region, an electric conductivity of the insulating region being below 10⁻⁸ S/cm. A height difference between the conductive region and the insulating region is defined by a difference Δh, wherein the difference Δh ranges between 0 to 20um.

### BRIEF DESCRIPTION OF THE DRAWINGS

The present application is further detailed with respect to the following drawings. These figures are not intended to limit the scope of the present application but rather illustrate certain attributes thereof. The same reference numbers will be used throughout the drawings to refer to the same or like parts.

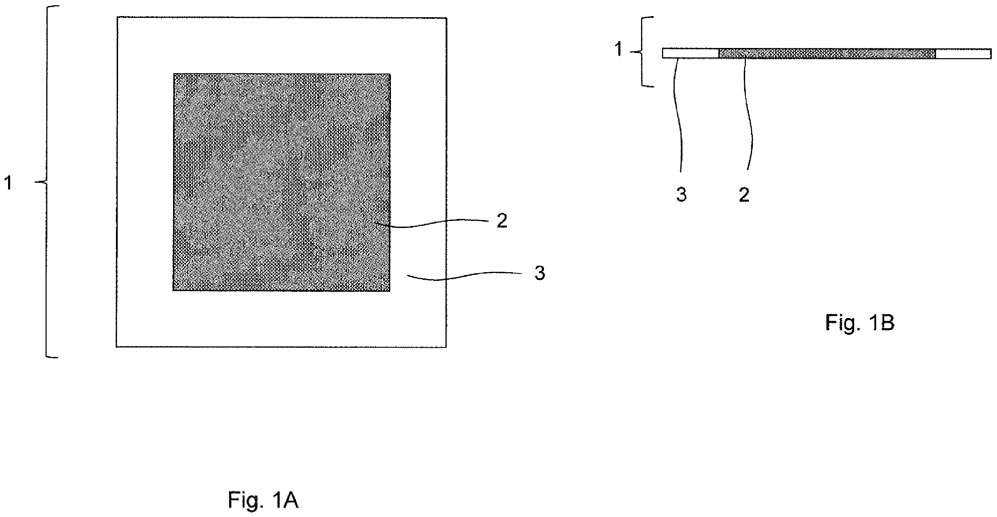

FIG. 1A shows a top view of an exemplary current collector used in a bipolar stacked battery in accordance with an embodiment of the disclosure;
FIG. 1B shows a side view of an exemplary current collector used in a bipolar stacked battery in accordance with an embodiment of the disclosure;
FIG. 2A shows a magnified side view of an exemplary current collector used in a bipolar stacked battery in accordance with an embodiment of the disclosure;
FIG. 2B shows a magnified side view of an exemplary current collector used in a bipolar stacked battery in accordance with an embodiment of the disclosure;
FIG. 2C shows a magnified side view of an exemplary current collector used in a bipolar stacked battery in accordance with an embodiment of the disclosure;
FIG. 3 shows a top view of an exemplary current collector used in a bipolar stacked battery in accordance with an embodiment of the disclosure;
FIG. 4A shows a magnified side view of an exemplary current collector used in a bipolar stacked battery in accordance with an embodiment of the disclosure;
FIG. 4B shows a magnified side view of an exemplary current collector used in a bipolar stacked battery in accordance with an embodiment of the disclosure;
FIG. 5 shows a side view of an exemplary bipolar stacked battery in accordance with an embodiment of the disclosure; and
FIG. 6 shows am exploded top view of an exemplary bipolar stacked battery in accordance with an embodiment of the disclosure.

### DETAILED DESCRIPTION OF THE INVENTION

The description set forth below is intended as a description of presently preferred embodiments of the disclosure and is not intended to represent the only forms in which the present disclosure can be constructed and/or utilized. The description sets forth the functions and the sequence of steps for constructing and operating the disclosure. It is to be understood, however, that the same or equivalent functions and sequences can be accomplished by different embodiments that are also intended to be encompassed within the spirit and scope of this disclosure.

This patent application proposes a system and method for forming current collectors having a conducting region being built in an insulating region and bipolar stacked batteries using such current collectors.

Referring to FIG.s 1A - 1B, a current collector 1 may be seen. The current collector 1 may be comprised of two primary regions: a conductive region 2 and an insulating region 3. The current collector 1 may be the physical connection between the conductive and insulating regions. This connection may be designed to ensure structural integrity while maintaining the distinct functional properties of each region. The conductive region 1 may be seamlessly integrated with the insulating region, creating a unified structure that is robust and reliable.

Additionally, it is important to note that both the conductive region 2 and the insulating region 3 are designed to not conduct ions. This feature is vital in applications like bipolar stacked batteries where ionic conduction could interfere with the functionality of the device or system in which the current collector is used. By preventing ion conduction, the current collector enhances the stability and reliability of the overall electrical system.

The thickness of the current collector 1 is not specifically limited. In accordance with an embodiment, the thickness of the current collector 1 may be 0.1 um to 1 mm and may be 1 um to 50 um.

The conductive region 2 may be crafted from materials known for their high electrical conductivity. This region may be the primary pathway for electrical current, enabling efficient transmission of electrons across the collector. The conductive region 2 may be composed of metal foil, a metal mesh, etc. Examples of metal constituting the current collector 1 may include, but is not limited to, Cu, Ni, Cr, Au, Pt, Ag, Au, Al, Fe, Ti, Zn, Co and stainless steel. It can be a metal pure element, doped, alloy or clad. The surface of the metal may also be covered with carbon or other material.

The conductive region 2 can also be a composite material made from a mixture of conductive and non-conductive materials, offering unique electrical properties and structural benefits. Conductive materials may include, but is not limited to, Cu, Ni, Cr, Au, Pt, Ag, Au, Al, Fe, Ti, Zn, Co and stainless steel or carbon. The non-conductive matrix may include, but is not limited to, plastic materials, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE). These materials may feature side chains modified by functional groups for improved performance. Additionally, the non-conductive component can consist of inorganic materials like SiO2, Al2O3, ZrO2, ZnO, TiO2, Fe2O3, Na2CO3, Na2SO4, MgCO3, MgSO4, CaCO3, CaSO4, S, P2S5, TiS2, and ZnS.

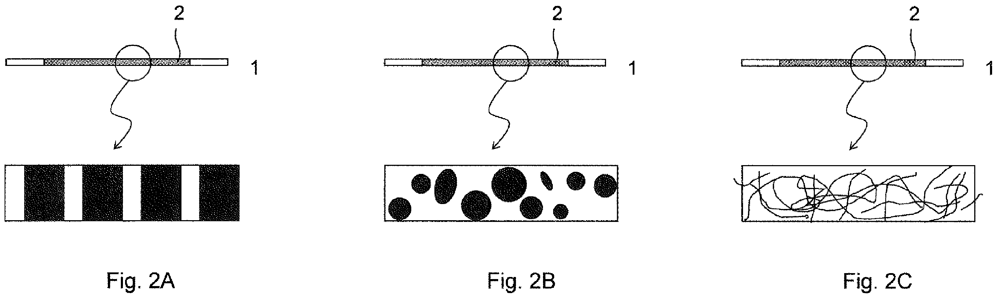

Referring to FIGs. 2A-2C, the configuration of the conductive and non-conductive mixture within the conductive region 2 may be variable. It may include non-conductive material voids filled with conductive materials or a random dispersion of conductive materials within a non-conductive matrix as may be seen in FIG. 2A. This flexibility in design may allow for customization according to specific application requirements. The conductive materials may assume various forms, such as spherical or needle-like shapes as may be seen in FIG. 2B. These shapes may be selected to offer anisotropic conductivity, which may enhance conductivity in the thickness direction of the current collector 1 while restraining in-plane conductivity. This property may be particularly beneficial for applications requiring directed current flow. To further improve conductivity in both the in-plane direction and along with the thickness of the current collector 1, conductive fibers like carbon nanotubes or carbon nanofibers can be incorporated as may be seen in FIG. 2C. The inclusion of these fibers may create a network within the non-conductive matrix that facilitates excellent electrical connectivity throughout the conductive region 2.

Referring back to FIG.s 1A - 1B, the insulating region 3 may be made to add the insulation around the conductive region 2. The insulating region 3 may be made from materials that are electrically insulating, preventing any unwanted flow of current outside the designated conductive path. The insulating region 3 may be integral in enhancing the safety and efficiency of the current collector 1 by preventing short circuits and other electrical hazards. It may be intricately formed around the conductive region 2, enveloping both its longer and shorter sides meticulously. The insulating region 3 presence is to ensure that any edge of the conductive region 2 may be fully shielded.

In terms of its electrical properties, the insulating region 3 may be built to be an exceptional insulator. The insulating region 3 electric conductivity should fall below 10⁻⁸ S/cm, with a stricter and more desirable threshold being below 10⁻¹⁰ S/cm. This may ensure that the insulator performs at its optimum, providing maximum protection against any undesirable electrical currents.

The materials used for the insulating region 3 may not be limited to specific materials as long as the material has required capability for insulation. Insulating region 3 may include, but is not limited to: Acrylic, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE). Also, it can be inorganic materials like SiO2, Al2O3, ZrO2, ZnO, TiO2, Fe2O3, Na2CO3, Na2SO4, MgCO3, MgSO4, CaCO3, CaSO4, S, P2S5, TiS2, and ZnS.

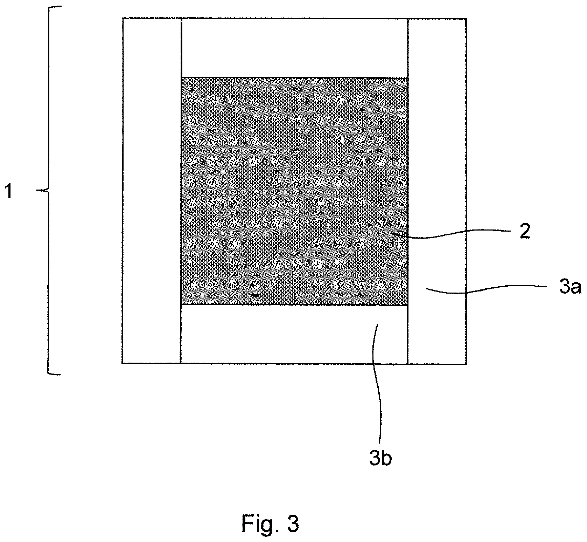

The insulating region 3 may consist of multiple different materials. For example, as shown in FIG. 3, a top view of the current collector 1 may be shown. In this embodiment, the vertical edge 3a does not need to be same materials as horizontal edge 3b.

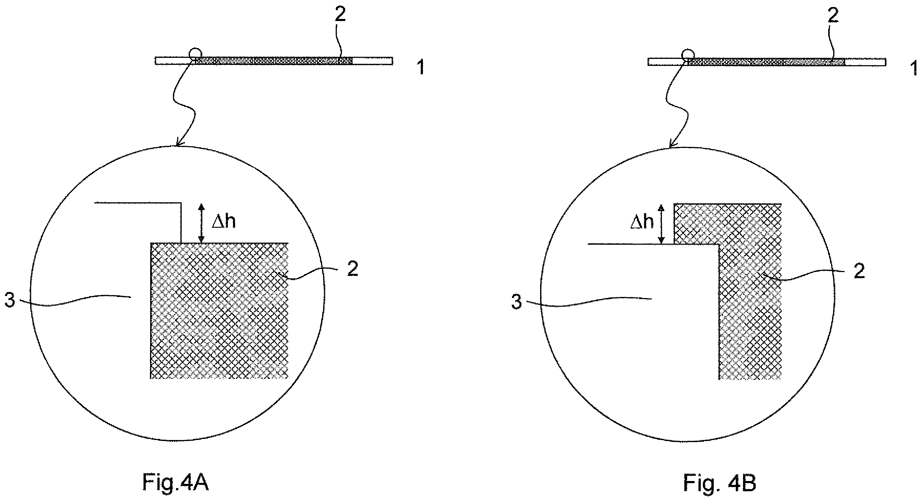

Referring to FIG. 4A - 4B, the position of the insulating region 3 may not be bound by stringent restrictions. The guiding principle is that the conductive region 2 should be comprehensively shielded. The key is for it to insulate the edge of the conductive region 2 electronically. Yet, may be vital to avoid the formation of the too much of height difference between the two regions. A difference in the height of the two regions could be problematic during the bonding process when creating the devices like bipolar stacked batteries. Height difference could create regions of uneven pressure. Such disparities in pressure could damage the current collector 1 or even the separator layer. The height difference may be defined as Δh. This distance, denoted as the distance of the bare surface of the conductive region 2, should be carefully calibrated to ensure insulation between layers. It's not limited by rigid parameters, but the difference Δh should ideally span a range from 0 to 500um, and more specifically, 0 to 100um, and preferably 0 to 20um. This may ensure a balanced design, offering optimum insulation while maintaining the structural integrity and performance of applications.

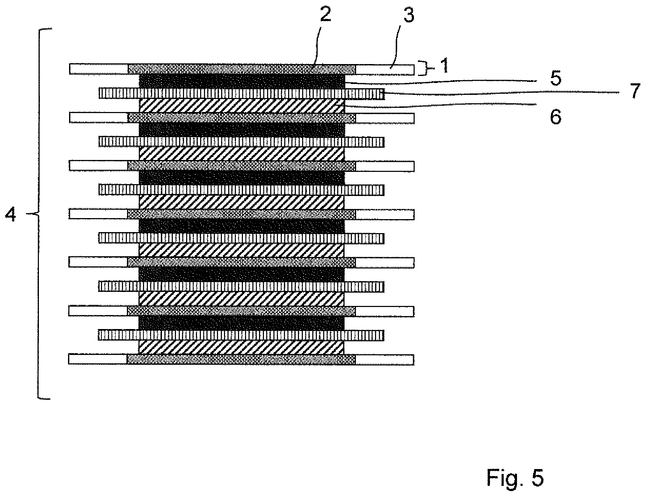

Referring to FIG. 5, a bipolar stacked battery 4 using a collector 1 described above may be shown. In the direction from high voltage side to low voltage, the bipolar stacked battery 4 may consisted of the current collector 1, a cathode layer 5, a separator 7, an anode layer 6, and another current collector 1 in a repeating order, i.e. , 1, 5, 7, 6, 1, 5, 7, 6, 1, ......., 1, 5, 7, 6, 1. As shown in FIG. 5, the very surface of the edge of bipolar stacked battery 4 may consist of the insulating region 3. All of the other components, the cathode layer 5, the separator 7 and the anode layer 6 may be held inside of the region defined by the edge of the current collector 1 (in other words, the outer edge of the insulating region 3). Namely, none of the layers are in contact with other layers in/between electric stacks. The top and bottom of the bipolar stacked battery 4 may have the current collector 1 and the conductive region 2 is exposed for the electric connection to external circuit or device.

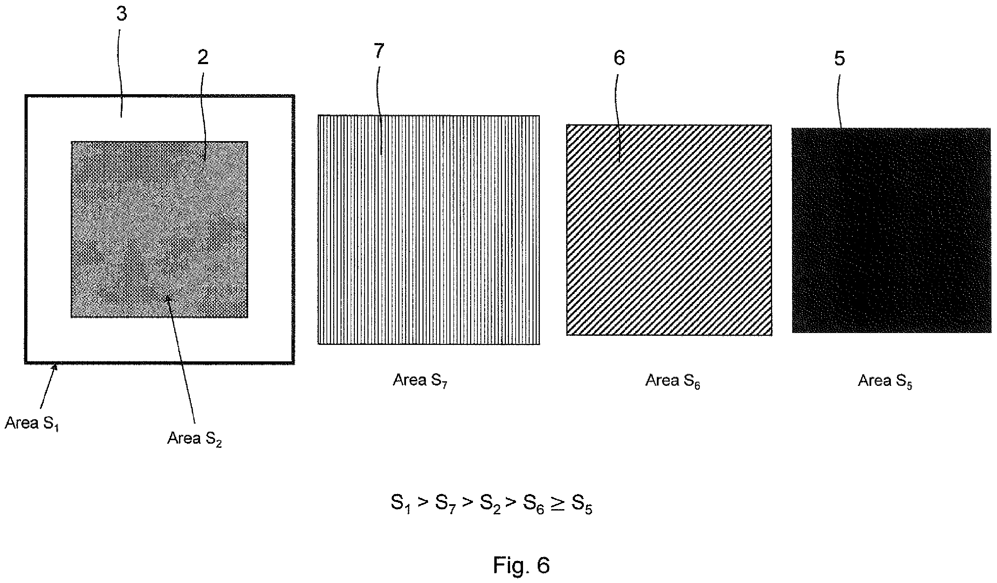

Referring to FIG. 6, the dimensional hierarchy of the components of the bipolar stacked battery 4 may be critical for its operation and is defined as follows: S1 > S7 > S2 > S6 ≥ S5, where:
S1 represents the area of the current collector 1,
S2 represents the area of the conductive region 2 in the current collector 1,
S5 represents the area of the cathode layer 5,
S6 represents the area of the anode layer 6,
S7 represents the area of the separator 7.

The area S1 of the current collector 1 may be the largest to safeguard against any form of shorting that can compromise the integrity of the bipolar stacked battery 4. A larger S1 may ensure that the conductive region 2 may be entirely within the confines of the insulating region 3, thus preventing electronic and ionic cross-communication.

The separator 7 having an area of S7, may be greater than the area S2 of the conductive region 2. This may be done by design to avert any possible electronic shorting between adjacent current collectors 1 within the configuration of the bipolar stacked battery 4.

The conductive region 2 should have a greater area S2 than both the area S6 of the anode layer 6 and the area S5 of the cathode layer 5 to ensure comprehensive contact with both electrode layers, facilitating efficient electron transfer and uniform current distribution.

Lastly, the area S6 of the Anode layer 6 may be equal to or larger than the area S5 of the cathode layer 5. This design may ensure that the ion flux is sufficient to maintain a consistent flow across the cathode layer 5, which is crucial for the charge and discharge cycles of the bipolar stacked battery 4.

The cathode layer 5 may be a layer containing at least a cathode active material (CAM). Examples of the CAM may include, but is not limited to: layered lithium containing oxide materials, such as LiCoO2, LiMnO2, LiNiO2, LiNixMnyCo1-x-yO2, LiNixCoyAl1-x-yO2, lithium containing phosphate with olivine structure, such as LiFePO4, LiFexMn1-xPO4, LiMnPO4, LiFexCo1-xPO4, LiCoPO4, lithium containing oxide materials with spinel structure, such as LiNi0.5Mn1.5O4, LiMn2O4, lithium excess layered structured oxide, such as Li2MnO3, Li2RuO3, Li2RuxTi1-xO3, Li2RuxSn1-xO3, Li2MnxTi1-xO3, Li2MnxSn1-xO3, layered lithium containing sulfide materials, such as TiS2, MoS2, NbS2, TaS2, Sulfur, or lithium containing sulfide with Chevrel structure, such as LiCuxMoS1-z.

The surface of CAM may be coated by thin layer of materials (i.e., coating). Example of the coating may include, but is not limited to crystalline phase, such as Li2ZrO3, LiNbO3, LiPO3, Li3PO4, LiTi2(PO4)3, LiZr(PO4)3, ZrO2, Al2O3, EtOLi, MtOLi, LiOH, Li2CO3 and/or amorphous phase, such as metal alkoxide, metal phosphate.

Cathode layer 5 may further contain solid electrolytes, binders, electron conductive additives, in addition to the CAM. Examples of the electrolyte may include, but is not limited to organic liquid, organic polymer, inorganic solids. Ideally, the electrolyte is inorganic solids because of higher transference number of lithium compared to liquid and higher ionic conductivity than organic polymer. Which is also because inorganic solids are usually rigid and do not show liquidity which is preferred to compose the bipolar stacked battery 4 without ionic shorting.

Examples of electrolyte include the materials those have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

Examples of a binder that may be contained in the cathode layer 2 may include but is not limited to: butadiene rubber(BR), butyl rubber(IIR), acrylate butadiene rubber(ABR), polyvinylidene difluoride (PVDF), Polytetrafluoroethylene (PTFE). Side chains of the binder may be modified by functional groups.

In addition, the cathode layer 5 may contain an electron conductive additive. For example, various types of carbon may include, but is not limited to acetylene black (AB), Ketjen black (KB), VGCF, carbon nanotubes, carbon nanohorns, and fullerenes.

The thickness of the cathode layer 5 may not be specifically limited, but a thicker layer may be preferred when higher capacity is required. For example, the thickness of the cathode layer 2 may be around 0.1 um to 1 mm and is more preferably 60um to 500 um.

The anode layer 6 is a layer that may contain at least an anode active material (AAM). Examples of the AAM may include, but are not limited to: layered lithium containing sulfide materials, such as TiS2, MoS2, NbS2, TaS2, titanium containing oxides, such as, Li4Ti5O12, TixNbyOz, LixTi2(PO4)3, tungsten containing oxides, such as Nb16W5O55, Nb18W16O93, vanadium containing oxide, such as LiVO2, Artificial carbon (or hard carbon), Graphite, Li-metal alloy, such as LixIn, LixSn, LixSi, LixGe, LixAl, or metallic lithium.

The anode layer 6 may further contain solid electrolytes, binders, electron conductive additives, in addition to AAM. Examples of electrolyte may include, but are not limited to organic liquid, organic polymer, inorganic solids. In general, the electrolyte may be inorganic solids because of higher transference number of lithium compared to liquid and higher ionic conductivity than organic polymer. Which is also because inorganic solids may be usually rigid and do not show liquidity which is preferred to compose the Bipolar Stacked Battery (4) without ionic shorting.

Some examples of the electrolyte may include, but are not limited to: the materials those have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M" is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

Examples of a binder that may be contained in the anode layer 3 may include but are not limited to: butadiene rubber(BR), butyl rubber(IIR), acrylate butadiene rubber(ABR), polyvinylidene difluoride (PVDF), Polytetrafluoroethylene (PTFE). Side chains of the binder may be modified by functional groups.

In addition, the anode layer 6 may contain an electron conductive additive. For example, various types of carbon may include, but are not limited to acetylene black (AB), Ketjen black (KB), VGCF, carbon nanotubes, carbon nanohorns, and fullerenes.

The thickness of the anode layer 3 may not be specifically limited. However, a thicker layer may be necessary when higher capacity is required. For example, the thickness of the anode layer 3 may be around 0.1 um to 1 mm and is more preferably 60um to 800 um.

The separator 7 may be an electron insulator but an ionic conductor. The electrolyte can be either organic liquid, organic polymer or inorganic solid. If an organic based electrolyte (liquid or polymer) is chosen, the separator 7 may be a porous membrane having polymers such as Polyethylene (PE), Polypropylene (PP) and combination of those. The membrane may be immersed by the organic based electrolyte.

The separator 7 may consist of inorganic solids because of a higher transference number of lithium compared to liquid and higher ionic conductivity than organic polymer. Which is also because inorganic solids are usually rigid and do not show liquidity which is preferred to compose the bipolar stacked battery 4 without ionic shorting.

Examples of electrolyte may include, but are not limited to organic liquid, organic polymer, inorganic solids. In general, the electrolyte may use inorganic solids because of higher transference number of lithium compared to liquid and higher ionic conductivity than organic polymer. Which is also because inorganic solids are usually rigid and do not show liquidity which is preferred to compose the bipolar stacked battery (4) without ionic shorting.

Some examples of electrolyte include, but are not limited to: the materials those have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M" is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

The solid electrolyte layer may contain a binder in addition to the above-mentioned solid electrolyte material. Examples of a binder may include but is not limited to: butadiene rubber(BR), butyl rubber(IIR), acrylate butadiene rubber(ABR), polyvinylidene difluoride (PVDF), Polytetrafluoroethylene (PTFE). Side chains of the binder may be modified by functional groups.

The thickness of the separator 7 may not be specifically limited, but a thinner layer may be used when higher capacity is required. For example, the thickness of the separator 7 may be around 0.1 um to 1 mm, and is more preferably 0.1um to 50 um.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public.

## Claims

1. A current collector for a bipolar battery comprising:
a conductive region, wherein the conductive region is formed of a composite material made from a mixture of conductive and non-conductive materials; and
an insulating region formed around the conductive region to shield the conductive region;
wherein the conductive region and the insulating region are formed to prevent ion conduction.

2. The current collector of Claim 1, wherein a thickness of the current collector is 1 um to 50 um.

3. The current collector of any preceding Claim, wherein the conductive region is formed of one of metal foil or a metal mesh, the metal foil and the metal mesh formed of one of Cu, Ni, Cr, Au, Pt, Ag, Au, Al, Fe, Ti, Zn, Co or stainless steel.

4. The current collector of any preceding Claim, wherein the conductive material is formed of at least one of: Cu, Ni, Cr, Au, Pt, Ag, Au, Al, Fe, Ti, Zn, Co and stainless steel, and carbon.

5. The current collector of any preceding Claim, wherein the non-conductive material is formed of at least one of: Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); and Polytetrafluoroethylene (PTFE).

6. The current collector of any preceding Claim, wherein the non-conductive material comprises inorganic materials.

7. The current collector of any preceding Claim, wherein the non-conductive material comprises inorganic materials, the inorganic materials comprises at least one of: SiO2, Al2O3, ZrO2, ZnO, TiO2, Fe2O3, Na2CO3, Na2SO4, MgCO3, MgSO4, CaCO3, CaSO4, S, P2S5, TiS2, and ZnS.

8. The current collector of any preceding Claim, wherein the composite material made from the mixture of conductive and non-conductive materials comprises a non-conductive material having voids, wherein the voids are filled with conductive materials.

9. The current collector of any preceding Claim, wherein the composite material made from the mixture of conductive and non-conductive materials comprises a non-conductive material having a random dispersion of conductive materials within the non-conductive material.

10. The current collector of any preceding Claim, wherein the conductive materials are in a form to provide anisotropic conductivity to enhance conductivity in the thickness direction of the current collector while restraining in-plane conductivity.

11. The current collector of any preceding Claim, wherein the conductive materials are in a form of at least one of: spherical or needle-like shapes.

12. The current collector of any preceding Claim, wherein the conductive materials are carbon nanotubes or carbon nanofibers.

13. The current collector of any preceding Claim, wherein an electric conductivity of the insulating region is below 10⁻⁸ S/cm.

14. The current collector of any preceding Claim, wherein the insulating region is formed of at least one of: Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE) or inorganic materials, wherein the inorganic materials are at least one of: SiO2, Al2O3, ZrO2, ZnO, TiO2, Fe2O3, Na2CO3, Na2SO4, MgCO3, MgSO4, CaCO3, CaSO4, S, P2S5, TiS2, and ZnS.

15. The current collector of any preceding Claim, wherein a height difference between the conductive region and the insulating region is defined by a difference Δh, wherein the difference Δh ranges between 0 to 20um.
